# EUROPÄISCHE PATENTANMELDUNG

(11) **EP 1 046 507 A1**
(43) Veröffentlichungstag der Anmeldung: **25.10.2000**
(21) Anmeldenummer: 99201242.7
(22) Anmeldetag: 19.04.1999
(51) Int. Cl.: B41J 2/16

(54) **Verfahren zum Herstellen von miniaturisierten Hohlkörpern**

(71) Anmelder: microParts Gesellschaft für Mikrostrukturtechnik mbH, 44227 Dortmund (DE)
(72) Erfinder: Dr. Peters, Ralf-Peter, D-51467 Bergisch-Gladbach (DE); Dr. Yu, Ying, D-44227 Dortmund (DE); Dr. Reinecke, Holger, 44229 Dortmund (DE)

(57) **Zusammenfassung**

Es wird ein Verfahren angegeben, mit dem Hohlkörper mit Abmessungen im Mikrometerbereich wirtschaftlich und mit hoher Präzision hergestellt werden können. Die Hohlkörper sind auf einer Trägerplatte (1) angeordnet. Sie sind bezüglich einer mechanischen Verformung oder bezüglich des Wärmetausches mit der Umgebung voneinander unabhängig. Die Hohlkörper haben mindestens eine Öffnung (3;13). Zwischen zwei benachbarten Hohlkörpern ist ein materialfreier Zwischenraum vorhanden.

Die Trägerplatte (1) ist mit einer mikrostrukturierten Kunststoffschicht belegt, auf die eine Schicht eines elektrisch leitfähigen Materials gegebenenfalls bildmäßig aufgetragen wird. Anschließend wird eine Metallschicht (8) mit im wesentlichen gleichmäßiger Dicke auf den leitfähigen Bereichen abgeschieden. Die unter der abgeschiedenen Metallschicht befindliche mikrostrukturierte Kunststoffschicht wird entfernt, wodurch der Hohlraum (12) entsteht.

Der metallene Hohlkörper besteht aus einer auf seine vorgesehene Verwendung abgestimmten Metallschicht (8). Er ist elastisch verformbar und für große Lastwechselfrequenzen geeignet.

Der metallene Hohlkörper kann für Fluidstrahl-Druckköpfe mit außen liegendem piezoelektrischen Antrieb oder zum Schalten eines Fluidstromes oder für Mikroreaktoren verwendet werden.

## Beschreibung

Die Erfindung betrifft ein Verfahren zum Herstellen von Hohlkörpern in Miniaturausführung, die sich auf einer Trägerplatte befinden und jeweils mit mindestens einer Öffnung versehen sind. Die Hohlkörper können zum Beispiel ein quaderförmiges Volumen mit Abmessungen von 10 bis 1000 Mikrometern in mindestens einer Richtung haben; in einer anderen Richtung können sie bis zu 50 Millimeter groß sein. Die Wanddicke der Hohlkörper beträgt von 5 bis 1000 Mikrometer. Die Form des Hohlkörpervolumens ist in weiten Bereichen variierbar.

Die Erfindung bezweckt, derartige Hohlkörper mit hoher Präzision wirtschaftlich herzustellen.

Aus US - 4 657 531 ist eine Verfahren zum Herstellen eines Fluidstrahl-Druckkopfes bekannt, das von einer mikrostrukturierten Schicht eines Positiv-Photoresists auf einer Trägerplatte ausgeht, wobei die beim Ätzen stehengebliebenen Bereiche der Resistschicht nach Form und Anordnung mit den späteren Fluidkanälen übereinstimmen. Die Aussparungen zwischen den stehengebliebenen Bereichen und deren Umgebung werden mit einem Material ausgefüllt, das die Seitenwände der Fluidkanäle bildet. Der Raum zwischen der Seitenwand eines Fluidkanals und der nächstliegenden Seitenwand des benachbarten Fluidkanals ist vollständig mit Material ausgefüllt.

Die Verformung eines derartigen Fluidkanals macht sich zumindest in den beiden benachbarten Kanälen ebenfalls bemerkbar, solche Kanäle lassen sich also nicht unabhängig voneinander verformen. Bei derartigen Kanälen mit metallenen Seitenwänden ist ein Wärmetausch zwischen mehreren benachbarten Kanälen möglich; ein Wärmetausch zwischen nur einem Kanal allein und seiner Umgebung ist jedoch nicht möglich.

Damit stellt sich die Aufgabe, ein Verfahren zum Herstellen von Hohlkörpern in Miniaturausführung anzugeben, die auf einer Trägerplatte angeordnet sind, und die bezüglich einer mechanischen Verformung oder bezüglich des Wärmetausches mit der Umgebung voneinander unabhängig sind.

Das Verfahren zum Herstellen derartiger Hohlkörper, deren Volumen außerhalb der Trägerplatte liegt, wobei die Mantelflächen der Hohlkörper teilweise im Bereich der Oberfläche der Trägerplatte liegen und mindestens teilweise von einer Metallschicht gebildet werden, und die jeweils mindestens eine Öffnung haben, und zwischen zwei benachbarten Hohlkörpern ein materialfreier Zwischenraum vorhanden ist, wobei eine Trägerplatte verwendet wird, die mit einer mikrostrukturierten Kunststoffschicht belegt ist, deren Struktur in Form und Anordnung der Struktur der herzustellenden Hohlkörper entspricht und die Teilbereiche der Oberfläche der Trägerplatte frei läßt, ist durch folgende erfindungsgemäßen Merkmale gekennzeichnet:
- Auftragen einer Schicht eines elektrisch leitfähigen Materials zumindest auf Oberseite und Seitenwände der mikrostrukturierten Kunststoffschicht,
- Abscheiden einer Metallschicht aus einer in einer Flüssigkeit befindlichen Metallverbindung mit im wesentlichen gleichmäßiger Dicke auf den leitfähigen Bereichen der mikrostrukturierten Kunststoffschicht sowie auf den leitfähigen Bereichen der Oberfläche der Trägerplatte,
- Entfernen der mikrostrukturierten Kunststoffschicht unter der abgeschiedenen Metallschicht, beginnend an mindestens einer Stelle, an der die Kunststoffschicht zugänglich ist,
wodurch die Hohlkörper in Miniaturausführung erhalten werden.

Die mikrostrukturierte Kunststoffschicht kann durch subtraktive oder additive Strukturierung oder durch eine Kombination dieser Verfahren hergestellt werden.

Bei der subtraktiven Strukturierung wird Material aus der Kunststoffschicht auf der Trägerplatte bildmäßig abgetragen, und die Oberfläche der Trägerplatte wird bereichsweise freigelegt. Ein strahlungsempfindlicher Kunststoff (ein Photoresist) auf der Trägerplatte kann nach bekannten Verfahren durch bildmäßiges Belichten der Resistschicht mit UV- oder Röntgenstrahlung und anschließendes selektives Herauslösen der beim Belichten löslich gebliebenen oder löslich gewordenen Bereiche der Resistschicht mittel eines Entwicklers mikrostrukturiert werden. Weiter kann die Kunststoffschicht durch Trockenätzen oder Naßätzen oder durch feinmechanische Präzisionsbearbeitung wie Fräsen, Bohren, Schleifen oder durch Laserbearbeitung mikrostrukturiert werden.

Bei der additiven Strukturierung wird ein Kunststoff bildmäßig auf die Trägerplatte aufgetragen, zum Beispiel mittels eines Formeinsatzes.

Ferner kann ein auf die Trägerplatte schichtförmig aufgetragener flüssiger Kunststoff durch Stereolithographie bereichsweise selektiv ausgehärtet werden. Nach dem Entfernen der nicht ausgehärteten Bereiche erhält man die mikrostrukturierte Schicht.

Die mikrostrukturierte Kunststoffschicht auf der Trägerplatte kann mehrstufig mikrostrukturiert sein, also bereichsweise unterschiedlich dick sein und Stufen aufweisen.

Das Volumen der herzustellenden Hohlkörper wird nach Form und Anordnung durch die auf der Oberfläche der Trägerplatte stehengebliebenen Bereiche der Kunststoffschicht gebildet. An den freigelegten Teilbereichen der Oberfläche der Trägerplatte ist die Mantelschicht der Hohlkörper mit der Trägerplatte verbunden. Die Struktur dieser Kunststoffschicht entspricht der Innenstruktur der herzustellenden Hohlkörper.

Nach dem Entwickeln der Kunststoffschicht wird eine Schicht aus elektrisch leitfähigem Material, zum Beispiel eines Metalls oder eines leitfähigen Kunststoffs, wie Polypyrrol oder Polyacetylen, zumindest auf Oberseite und Seitenwände der strukturierten Kunststoffschicht und gegebenenfalls auf die freiliegenden Bereiche der Oberfläche der Trägerplatte aufgetragen. Diese leitfähig machende Schicht kann durch - gegebenenfalls bildmäßiges - Aufsprühen (Sputtern) oder durch Abscheiden eines Metalls aus der Dampfphase oder durch Bekeimen mittels Metallkeimen aus der Flüssigphase erzeugt werden. Gegebenenfalls bleiben Teilbereiche der Kunststoffschicht und der Trägerplatte frei von der Schicht des leitfähigen Materials. Die Zwischenräume der mikrostrukturierten Kunststoffschicht können beispielsweise mit einer Flüssigkeit gefüllt werden, die eine Metallverbindung enthält. Diese Flüssigkeit wird von der Oberseite der Trägerplatte zum Beispiel mit Laserlicht oder UV-Licht bestrahlt. Dabei wird die Metallverbindung chemisch umgewandelt, und an den Wänden der Mikrostruktur und auf dem Strukturgrund wird eine Metallschicht abgeschieden, die die Oberfläche der Mikrostruktur leitfähig macht. Die verwendete Flüssigkeit wird vor der nächsten Stufe des erfindungsgemäßen Verfahrens aus der mikrostrukturierten Kunststoffschicht beseitigt. Die leitfähig machende Metallschicht hat eine Dicke von 0,1 bis 5 Mikrometern, bevorzugt 0,2 bis 1 Mikrometer.

Die leitfähige machende Schicht ist bevorzugt entweder eine einfach zusammenhängende Schicht, die keine nicht leitfähigen Bereiche enthält, oder sie ist eine nicht-einfach zusammenhängende Schicht, die inselförmig angeordnete nicht leitfähige Bereiche enthält. Daneben ist auch eine nicht zusammenhängende Schicht verwendbar, bei der die leitfähigen Bereiche inselförmig angeordnet sind.

Es kann zweckmäßig sein, vor dem Leitfähigmachen der mikrostrukturierten Kunststoffschicht mindestens auf die nicht mit der Kunststoffschicht bedeckten frei liegenden Bereiche der Trägerplatte eine Zwischenschicht aufzubringen, die die Haftung der anschließend aufzubringenden Metallschicht auf der Trägerplatte verbessert. Dazu wird eine Schicht eines Metalls, wie Chrom, Palladium, Titan, aus der Dampf- oder der Flüssigphase aufgetragen. Derartige Haftschichten haben eine Dicke von 10 bis 100 Nanometer, bevorzugt von 20 bis 40 Nanometer.

Auf der mikrostrukturierten leitfähig gemachten Kunststoffschicht wird galvanisch oder chemisch eine Metallschicht aus einer eine Metallverbindung enthaltenden Flüssigkeit abgeschieden. Diese Metallschicht hat eine im wesentlichen gleichmäßige Dicke auf der mikrostrukturierten leitfähig gemachten Kunststoffschicht und den nicht mit der Kunststoffschicht bedeckten leitfähigen Bereichen der Oberfläche der Trägerplatte; sie bildet die Mantelschicht der Hohlkörper und dient zur Verankerung der Hohlkörper auf der Trägerplatte.

Das für die Metallschicht gewählte Material sowie die Dicke und Form der Metallschicht können an die Verwendung des erfindungsgemäß hergestellten Hohlkörpers angepaßt werden, die Metallschicht kann funktionsspezifisch ausgelegt werden. Es können Metalle, wie Nickel, Kupfer, Gold, Eisen, Zinn, Zink, Aluminium, beziehungsweise deren Legierungen verwendet werden. Die Metallschicht ist 5 bis 1000 Mikrometer dick, bevorzugt 10 bis 500 Mikrometer.

Für Hohlkörper, die zum Beispiel für den Wärmetausch zwischen einer Flüssigkeit innerhalb des Hohlkörpers und der Umgebung des Hohlkörpers vorgesehen sind, wird ein Metall mit hoher Wärmeleitfähigkeit gewählt. Die Dicke der Metallschicht wird an die Druckdifferenz zwischen Innenraum und Außenraum des Hohlkörpers angepaßt.

Für Hohlkörper, die zum Beispiel für eine mechanische Wechselbeanspruchung, wie piezoelektrische Verformung von außen, vorgesehen sind, wird ein elastisch verformbares Metall gewählt. Die Dicke und die Form der Metallschicht werden auf die vorgesehene mechanische Verformung und die auftretenden Kräfte abgestimmt.

Für die Metallschicht wird ein Metall gewählt, das gegen die auf beiden Seiten der Metallschicht anstehenden Medien beständig ist und für den vorliegenden Druck und die Temperatur geeignet ist.

Die Metallschicht kann mehrschichtig aufgebaut werden, zum Beispiel dreischichtig aus einer 1 Mikrometer dicke Goldschicht auf der Innenseite des Hohlkörpers, einer 25 Mikrometer dicken Mittelschicht aus Nickel und einer 2 Mikrometer dicken Außenschicht aus Gold.

Nach dem Abscheiden der Metallschicht werden die darunter liegenden Bereiche der mikrostrukturierten Kunststoffschicht entfernt. Dazu kann der Kunststoff, beginnend an den Stellen der Kunststoffschicht, die nicht leitfähig gemacht worden sind und nicht von der Metallschicht bedeckt sind, mittels eines Lösemittels herausgelöst werden. Derartige Stellen können bereits beim Leitfähigmachen der mikrostrukturierten Kunststoffschicht vorgesehen werden, oder sie können nach dem Leitfähigmachen oder nach dem Abscheiden der Metallschicht erzeugt werden, zum Beispiel durch Bohren, Fräsen, Laserbearbeitung oder durch Einschneiden der mit der Metallschicht bedeckten mikrostrukturierten Kunststoffschicht. Dabei wird die Metallschicht an Stellen abgetragen, unter denen die Kunststoffschicht liegt, und die die späteren Öffnungen der Hohlkörper bilden. Ferner kann die Trägerplatte mit mindestens einer Öffnung versehen werden, die den Zutritt des Lösemittels zu der mikrostrukturierten Kunststoffschicht durch die Öffnungen in der Trägerplatte hindurch erlauben. Diese mindestens eine Öffnung kann vor dem Mikrostrukturieren der Kunststoffschicht oder an einer anderen Stelle des Verfahrens vor dem Entfernen der mikrostrukturierten Kunststoffschicht unter der abgeschiedenen Metallschicht in die Trägerplatte eingebracht werden. Eine in die Trägerplatte vor dem Mikrostrukturieren der Kunststoffschicht eingebrachte Öffnung wird mit dem Material der Kunststoffschicht ausgefüllt.

Folgende Lösemittel sind für die angegebenen Kunststoffe geeignet:
- für Resist S 1811:
   zuerst Kalilauge (5%ig) bei 75 °C bis 90 °C
   anschließend Aceton bei Raumtemperatur
   anschließend N-Methylpyrrolidon bei 70 °C bis 90 °C
- für Polymethylmethacrylat:
   Ethylacetat bei etwa 40 °C
- für Epoxid SU 8:
   N-Methylpyrrolidon bei etwa 130 °C

Die Behandlungszeit richtet sich im wesentlichen nach der Größe und Form der unter der abgeschiedenen Metallschicht herauszulösenden Kunststoffschicht.

Weiter kann die Kunststoffschicht durch Zersetzen des Kunststoffs entfernt werden, zum Beispiel bei Polymethylmethacrylat durch Pyrolyse bei etwa 900 °C, wenn eine bei derartigen Temperaturen beständige Trägerplatte und abgeschiedene Metallschicht vorliegt.

Wie sich überraschend gezeigt hat, läßt sich die mikrostrukturierte Kunststoffschicht unter der abgeschiedenen Metallschicht restlos entfernen, wenn jeder zu entfernende Bereich der Kunststoffschicht an mindestens einer Stelle frei zugänglich ist. In der Kunststoffstruktur sind keine durchgehenden Kanäle erforderlich, durch die ein Lösemittel in die Kunststoffschicht eingeleitet werden kann und eine Lösung oder eine Schmelze herausgeleitet werden kann.

Die Trägerplatte kann aus unterschiedlichen Materialien bestehen. Außer nicht leitfähigen Materialien wie Glas, Keramik, Quarz, oder nicht leitfähigen Kunststoffen, wie Polysulfon, Polyethersulfon, Polymethylmethacrylat, Polycarbonat, können leitfähige Kunststoffe, wie Polyacetylen, Polypyrrol (bevorzugt als Beschichtung auf einer Trägerplatte aus einem anderen Material), oder Halbleiter, wie Silizium, Germanium oder Metalle, wie Nickel, Kupfer, Gold, Stahl, Messing, Aluminium, verwendet werden. Ferner kann eine Trägerplatte aus Kunststoff verwendet werden, die mit einer mikrostrukturierten Kunststoffschicht belegt ist, deren Kunststoff selektiv gegen den Kunststoff der Trägerplatte entfernbar ist. Bei Trägerplatten aus leitfähigem Material oder mit leitfähiger Schicht ist es zweckmäßig, auch die nicht mit der mikrostrukturierten Kunststoffschicht bedeckten Bereiche der Oberfläche der Trägerplatte mit der Leitfähigkeitsschicht zu überziehen. Falls die Hohlkörper auch an den Seiten, die später von der Trägerplatte gebildet werden, aus einem vorgegebenen Material bestehen sollen, das sich von dem Material der Trägerplatte unterscheidet, kann das vorgegebene Material auf die Trägerplatte aufgebracht werden, bevor die zu strukturierende Kunststoffschicht aufgebracht wird. Zumindest die Oberfläche der Trägerplatte besteht aus einem Material, das gegen das zum Herauslösen der Kunststoffschicht verwendete Lösemittel unempfindlich ist. Falls die Trägerplatte selbst gegen das verwendete Lösemittel empfindlich ist, kann auf die Seite der Trägerplatte, die die Hohlkörper trägt, ein Rahmen dicht aufgesetzt werden, der den Kontakt des Lösemittels mit dem empfindlichen Teil der Trägerplatte verhindert.

Das erfindungsgemäße Verfahren und die damit hergestellten Hohlkörper haben folgende Vorteile:
- Der metallene Hohlkörper besteht aus einer auf seine vorgesehene Funktion abgestimmten (funktionsspezifischen) Metallschicht.
- Der metallene Hohlkörper ist elastisch verformbar und für große Lastwechselfrequenzen geeignet.
- Die Verformung eines Hohlkörpers wirkt sich auf einen benachbarten Hohlkörper nicht aus.
- Der metallene Hohlkörper ermöglicht einen schnellen Wärmetausch zwischen seinem Inneren und der Umgebung.

Die nach dem erfindungsgemäßen Verfahren hergestellten Hohlkörper werden beispielsweise wie folgt verwendet:
- als metallene Gefäße für Mikroreaktoren mit guten Wärmetauscheigenschaften mit der Umgebung;
- als mehrere nebeneinander angeordnete Hohlkörper für Fluidstrahl-Druckköpfe mit außen liegendem piezoelektrischen Antrieb;
- als Hohlkörper zum Leiten und Schalten eines Fluidstromes zum Beispiel für die Gefrier-Ventil-Technik (ice-valve-Technik).

Das erfindungsgemäße Verfahren wird anhand der Figuren beispielhaft erläutert.

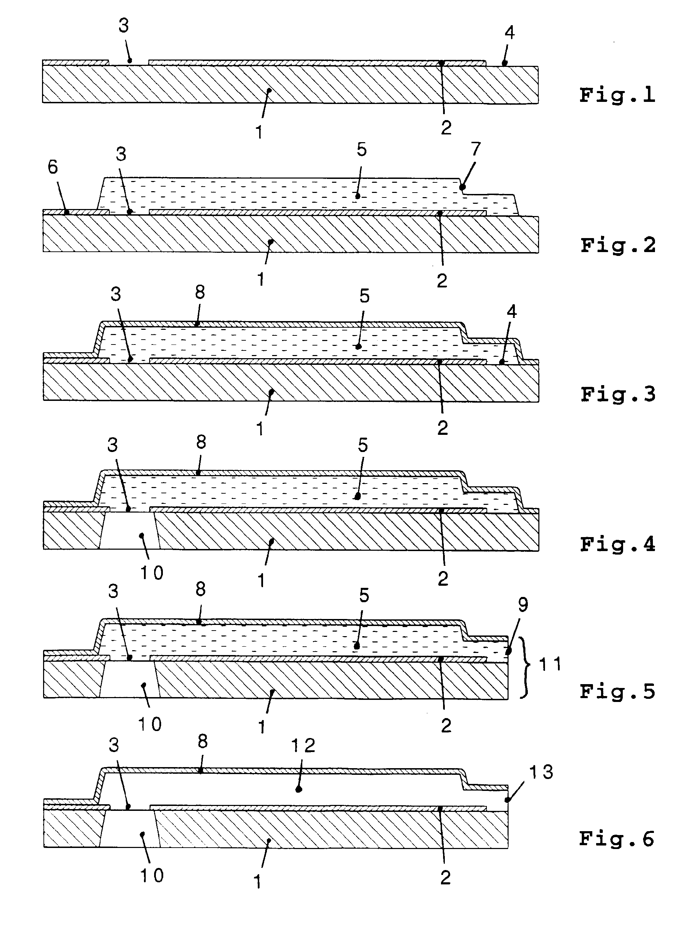

Die Figuren 1 bis 6 zeigen im Querschnitt einige Zwischenstufen beim Herstellen des miniaturisierten Hohlkörpers nach dem erfindungsgemäßen Verfahren.

Auf der Trägerplatte (1) in Figur 1 befindet sich eine Metallschicht (2), die mit einer Aussparung (3) versehen ist und die einen Bereich (4) der Trägerplatte frei läßt. Auf der Metallschicht (2) und auf den nicht mit der Metallschicht bedeckten Bereichen (3;4) der Trägerplatte wird eine Kunststoffschicht in einer vorgegebenen Dicke aufgetragen. Die Kunststoffschicht wird beispielsweise bildmäßig belichtet. Die nach der Belichtung löslich gewordenen oder löslich gebliebenen Bereiche werden in bekannter Weise mittels eines Entwicklers entfernt. Anstelle dieser photolithographischen Mikrostrukturierung oder zusätzlich zu dieser Strukturierung kann die Kunststoffschicht durch feinmechanische Präzisionsbearbeitung mikrostrukturiert werden.

In Figur 2 ist die dreidimensional mikrostrukturierte Kunststoffschicht (5) dargestellt, die in einer vorgegebenen Dicke die Metallschicht auf der Trägerplatte sowie die Aussparung (3) in der Metallschicht und den nicht mit der Metallschicht bedeckten Bereich (4) bedeckt. Der Bereich (6) der Metallschicht ist frei von Kunststoff. Die Kunststoffschicht ist bereichsweise unterschiedlich dick und weist eine Stufe (7) auf. Auf die Oberfläche der mikrostrukturierten Kunststoffschicht einschließlich aller ihrer Seitenwände sowie gegebenenfalls auf die leitfähigen und die nicht leitfähigen Bereiche der Trägerplatte wird eine Schicht eines elektrisch leitfähigen Materials aufgetragen.

Auf den leitfähigen Bereichen der Kunststoffschicht und der Trägerplatte wird eine Metallschicht (8) mit im wesentlichen gleichmäßiger Dicke abgeschieden, wie in Figur 3 dargestellt ist.

In Figur 4 ist die Trägerplatte mit einer Bohrung (10) versehen, die die Trägerplatte durchdringt und sich bis zur Aussparung (3) erstreckt. Damit wird die Kunststoffschicht an dieser Stelle zugänglich.

Wie Figur 5 zeigt, wird am Rand der Trägerplatte jeweils ein Streifen der Trägerplatte, der Kunststoffschicht und der beiden Metallschichten mechanisch abgetragen. Dadurch erhalten alle Schichten einen glatten Rand (11), und die Kunststoffschicht wird an der Stelle (9) zugänglich.

Anschließend wird - ausgehend von den beiden zugänglichen Stellen - die Kunststoffschicht unter der abdeckenden Metallschicht entfernt. Damit wird der in Figur 6 dargestellte mikrostrukturierte Hohlkörper erhalten, der den Hohlraum (12) umgibt. Dieser Hohlraum ist an der Öffnung (13) und an der Öffnung (10 mit 3) zugänglich.

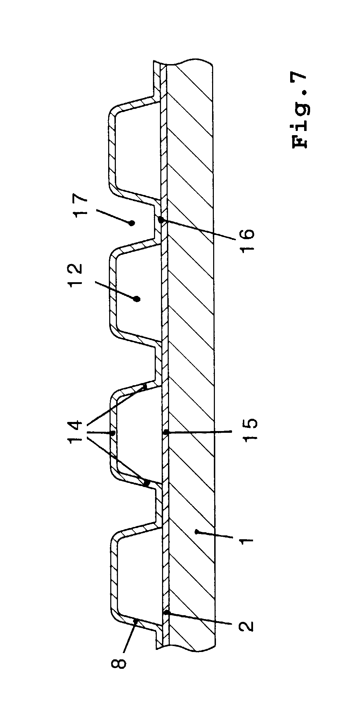

In Figur 7 ist ein Teil der Trägerplate mit mehreren darauf befindlichen Hohlkörpern im Querschnitt dargestellt. Dieser Querschnitt liegt senkrecht zum Querschnitt in der Figur 6 und zwischen den beiden Öffnungen (3) und (13). Dargestellt sind die Trägerplatte (1), die auf der Trägerplatte befindliche Metallschicht (2) und die abgeschiedene Metallschicht (8). Die über die Trägerplatte hervorstehenden Bereiche (14) der abgeschiedenen Metallschicht und ein Teil (15) der Metallschicht auf der Trägerplatte bilden den Hohlkörper, der den Hohlraum (12) umschließt. Die abgeschiedene Metallschicht (8) ist mäanderförmig und bildet mehrere auf der Trägerplatte befindliche Hohlkörper. An den Stellen (16) ist die abgeschiedene Metallschicht (8) mit der Metallschicht (2) auf der Trägerplatte verbunden. Zwischen zwei benachbarten Hohlkörpern befindet sich jeweils ein Zwischenraum (17), der frei von Material ist.

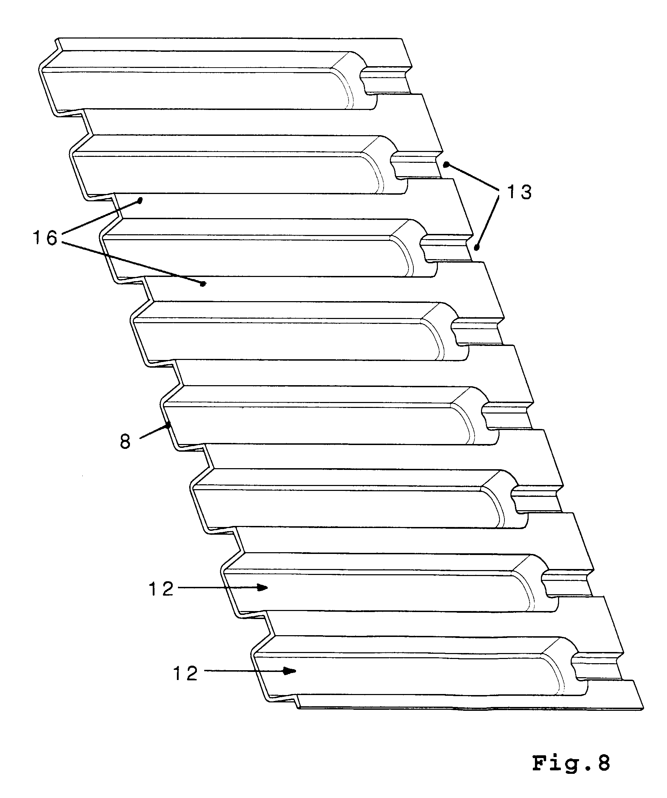

In Figur 8 ist die Innenseite eines Teils der abgeschiedenen Metallschicht (8) in Schrägansicht dargestellt, jedoch ohne die Trägerplatte, mit der diese abgeschiedene Metallschicht an den Stellen (16) streifenartig verbunden ist. Dargestellt ist die mäanderförmige Metallschicht (8) für mehrere nebeneinander liegende längliche Hohlkörper mit jeweils einer Öffnung (13) an ihrem einen Ende.

### Beispiel 1: Herauslösen eines Resists aus miniaturisierten Hohlkörpern

Auf einer Trägerplatte aus Kupfer wird eine Vielzahl von nebeneinander liegenden länglichen Hohlkörpern, die jeweils etwa 20 Millimeter lang, 130 Mikrometer hoch und 200 Mikrometer breit sind, mittels UV-Lithographie und Galvanoformung hergestellt. Als Resist wird S 1811 (Hersteller: Shipley) eingesetzt. Nach der Galvanoformung werden die noch mit Resist gefüllten metallenen Hohlkörper mittels Wafersägen an den Frontseiten geöffnet. Die Hauptmenge des in den Hohlkörpern enthaltenen Resists wird durch Eintauchen der Trägerplatte mit den Hohlkörpern in 5 %ige Kalilauge (5 Minuten bei 82 °C) herausgelöst. Danach wird die Trägerplatte mit den Hohlkörpern in Wasser getaucht und gespült. Anschließend wird die Platte mit den Hohlkörpern in Aceton (etwa 10 Minuten bei Raumtemperatur) und danach in N-Methylpyrrolidon (7 Minuten bei 80 °C) getaucht und erneut gewässert, bis die Kalilauge restlos aus den Hohlkörpern entfernt ist, was durch Messen des pH-Wertes verfolgt wird. Nach dem Trocknen liegt eine Vielzahl von Resist-freien Hohlkörpern auf der Trägerplatte vor.

### Beispiel 2: Herstellen von Hohlkörpern als Gefäß für Mikroreaktionen

Auf einer Glasplatte werden mittels UV-Lithographie mehrere mäanderförmige Stege aus einem Photoresist (Epoxid SU 8; Hersteller: micro resist technology) erzeugt. Die Stege sind 100 Mikrometer breit, 120 Mikrometer hoch und haben eine Gesamtlänge von etwa 25 Millimetern. Die Resist-freien Bereiche der Glasplatte und die Stege werden mit einer 30 Nanometer dicken Chrom-Schicht und mit einer 200 Nanometer dicken Gold-Schicht besputtert. Anschließend werden eine 20 Mikrometer dicke Kupfer-Schicht und eine 2 Mikrometer dicke Gold-Schicht galvanisch aufgebracht. Danach wird die Glasplatte jeweils an beiden Enden jedes Mäanders mittels eines Lasers durchbohrt, wodurch die beiden Enden jedes mäanderförmigen Resist-Steges freigelegt werden. Die Resist-Stege werden innerhalb von etwa 2 Stunden mittels des im oben stehenden Beispiels angegebenen Verfahrens unter der Metallschicht herausgelöst, womit der mäanderförmige Hohlkörper erhalten wird.

### Beispiel 3: Herstellen von Hohlkörpern für einen Fluidstrahl-Druckkopf

Auf eine Silizium-Platte wird zunächst eine 20 µm dicke Nickelschicht und anschließend eine 40 µm dicke Schicht aus Resist S 1811 aufgetragen. Die Resistschicht wird zwecks lithographischer Strukturierung durch eine Maske hindurch bildmäßig belichtet. Beim Entwickeln werden die löslich gewordenen Bereiche der Resistschicht mittels Standard-Entwickler (AZ 409 K, Hersteller: Hoechst AG) herausgelöst. Die entwickelte Resistschicht besteht aus 108 nebeneinander liegenden länglichen geraden Stegen, die 40 µm hoch, 200 µm breit und 10 Millimeter lang sind. Zwischen benachbarten Stegen befindet sich jeweils ein 50 µm breiter grabenförmiger Bereich, in dem die Resistschicht herausgelöst worden ist und die Oberfläche der Nickelschicht frei liegt. Die Stege entsprechen nach Form und Anordnung der für einen Fluidstrahl-Druckkopf vorgegebenen Auslegung der Fluidkanäle. An einem Ende enthalten die Stege jeweils eine Vertiefung; an dieser ist die Resistschicht 20 µm hoch, 30 µm breit und 100 µm lang. Höhe und Breite dieser Stellen entsprechen nach Form und Größe den späteren Düsen, aus denen der Fluidstrahl tröpfchenweise austritt.

Auf diese Mikrostruktur wird eine 900 Nanometer dicke Palladiumschicht aufgedampft, wodurch die Oberfläche der mikrostrukturierten Resistschicht leitfähig gemacht wird. Auf der gesamten Mikrostruktur wird eine 10 µm dicke Nickelschicht galvanisch abgeschieden. Diese Schicht wächst zwischen den Stegen auf die Oberfläche der auf der Platte befindlichen Nickelschicht auf.

Die Silizium-Platte wird an dem jeweils einen Ende jedes mit Nickel überdeckten Resist-Steges mittels eines Lasers von der Rückseite her durchbohrt. Die Öffnung durchdringt die ganze Silizium-Platte und die direkt auf der Oberfläche aufgebrachte Nickelschicht, jedoch nicht die galvanisch abgeschiedene Nickelschicht; hierdurch wird der Resist-Steg an seinem einen Ende zugänglich.

An den jeweils anderen Enden der mit Nickel überdeckten Resist-Stege wird ein Streifen der Platte abgeschnitten; der Schnitt verläuft durch jeden Resist-Steg kurz vor dessen Ende und durch beide Nickelschichten und die Silizium-Platte in ihrer ganzen Dicke, womit jeder Resist-Steg an seinem anderen Ende zugänglich wird. Auf die Oberseite der Platte wird ein gegen die Platte abgedichteter Rahmen aufgesetzt, der den Kontakt der Platte mit den Lösemitteln verhindert.

Die Oberseite der Platte wird innerhalb des Rahmens nacheinander mit Kalilauge, Aceton und N-Methylpyrrolidon behandelt, wie oben beschrieben ist, dabei wird das Material der Resist-Stege zwischen den beiden Nickelschichten herausgelöst.

Nach dem Trocknen liegt eine Kanalplatte mit integrierten Düsen vor, die 40 Düsen pro Zentimeter Plattenbreite mit dem zu jeder Düse führenden Fluidkanal enthält. Die Kanäle und die Düsen haben einen im wesentlichen rechteckigen Querschnitt. Die vier Wände jedes Kanals und jeder Düse bestehen aus Nickel. Zwischen den Außenwänden zweier benachbarter Kanäle besteht ein etwa 30 µm breiter Zwischenraum.

Die Kanalplatte mit integrierten Düsen wird in einen Fluidstrahl-Druckkopf eingebaut. Jeder einen Kanal bildende Hohlkörper wird von außen durch einen piezoelektrischen Aktor mit hoher Frequenz stoßartig verformt, wodurch jeweils ein Tröpfchen eines in dem Kanal und in der Düsenöffnung anstehenden Fluids ausgestoßen wird.

## Patentansprüche

1. Verfahren zum Herstellen von Hohlkörpern in Miniaturausführung, die auf einer Trägerplatte (1) angeordnet sind, deren Volumen außerhalb der Trägerplatte liegt, wobei die Mantelflächen der Hohlkörper teilweise im Bereich der Oberfläche der Trägerplatte liegen und mindestens teilweise von einer Metallschicht gebildet werden, und die jeweils mindestens eine Öffnung haben, und zwischen zwei benachbarten Hohlkörpern ein materialfreier Zwischenraum (17) vorhanden ist, wobei eine Trägerplatte verwendet wird, die mit einer mikrostrukturierten Kunststoffschicht (5) belegt ist, deren Struktur in Form und Anordnung der Struktur der herzustellenden Hohlkörper entspricht und die Teilbereiche der Oberfläche der Trägerplatte frei läßt, gekennzeichnet durch
• Auftragen einer Schicht eines elektrisch leitfähigen Materials zumindest auf Oberseite und Seitenwände der mikrostrukturierten Kunststoffschicht (5),
• Abscheiden einer Metallschicht (8) aus einer in einer Flüssigkeit befindlichen Metallverbindung mit im wesentlichen gleichmäßiger Dicke auf den leitfähigen Bereichen der mikrostrukturierten Kunststoffschicht (5) sowie auf den leitfähigen Bereichen der Oberfläche der Trägerplatte (1),
• Entfernen der mikrostrukturierten Kunststoffschicht (5) unter der abgeschiedenen Metallschicht (8), beginnend an mindestens einer Stelle (3;13), an der die Kunststoffschicht zugänglich ist,
wodurch die Hohlkörper in Miniaturausführung erhalten werden.

2. Verfahren nach Anspruch 1, gekennzeichnet durch
• Verwenden einer Trägerplatte (1)
• aus Metall, wie Nickel, Kupfer, Gold, Stahl, Messing, Aluminium,
• oder aus einem Halbleiter wie Silizium, Germanium,
• oder aus einem leitfähigen Kunststoff, wie Polyacetylen, Polypyrrol, der bevorzugt als Schicht auf eine Platte aus einem anderen Material aufgebracht wird,
• oder aus einem nicht leitfähigen Kunststoff, wie Polymethylmethacrylat, Polysulfon, Polyethersulfon, Polycarbonat,
• oder aus Glas, Keramik, Quarz.

3. Verfahren nach den Ansprüchen 1 und 2, gekennzeichnet durch
• Verwenden einer mikrostrukturierten Kunststoffschicht (5) auf der Trägerplatte, die mehrstufig mikrostrukturiert ist.

4. Verfahren nach den Ansprüchen 1 bis 3, gekennzeichnet durch
• Aufbringen einer die Haftung vermittelnden Schicht auf die Trägerplatte mindestens in ihren freiliegenden Bereichen durch Abscheiden eines Metalls, wie Chrom, Palladium, Titan, aus der Dampf- oder der Flüssigphase, mit einer Dicke von 10 bis 100 Nanometern, bevorzugt von 20 bis 40 Nanometern.

5. Verfahren nach den Ansprüchen 1 bis 4, gekennzeichnet durch
• Verwenden einer Trägerplatte (1) aus Kunststoff, die mit einer mikrostrukturierten Kunststoffschicht (5) belegt ist, deren Kunststoff selektiv gegen den Kunststoff der Trägerplatte entfernbar ist.

6. Verfahren nach den Ansprüchen 1 bis 5, gekennzeichnet durch
• Auftragen einer Schicht eines elektrisch leitfähigen Materials
• durch Aufsprühen (Sputtern) eines Metalls,
• oder durch Abscheiden eines Metalls aus der Dampfphase,
• oder durch Bekeimen mittels Metallkeimen
mit einer Dicke von 0,1 bis 5 Mikrometern, bevorzugt von 0,2 bis 1 Mikrometer.

7. Verfahren nach den Ansprüchen 1 bis 6, gekennzeichnet durch
• Abscheiden einer Metallschicht (8), die einfach zusammenhängend ist, mit einer Dicke von 5 Mikrometer bis 1000 Mikrometer, bevorzugt von 10 Mikrometer bis 500 Mikrometer,und
• Abtragen der Metallschicht an mindestens einer Stelle, unter der ein Teil der mikrostrukturierten Kunststoffschicht liegt.

8. Verfahren nach den Ansprüchen 1 bis 6, gekennzeichnet durch
• Abscheiden einer Metallschicht (8), die nicht-einfach zusammenhängend ist und die mindestens eine Aussparung hat, unter der ein Teil der mikrostrukturierten Kunststoffschicht liegt.

9. Verfahren nach den Ansprüchen 1 bis 6, gekennzeichnet durch
• Abscheiden einer Metallschicht (8), die einfach zusammenhängend ist, auf der mikrostrukturierten Kunststoffschicht (5), und
• Einbringen mindestens eines Durchbruches (10) in die Trägerplatte von der Rückseite an mindestens einer Stelle, auf der ein Teil der mikrostrukturierten Kunststoffschicht liegt.

10. Verfahren nach den Ansprüchen 1 bis 6, gekennzeichnet durch
• Verwenden einer Trägerplatte (1), die mit mindestens einem Durchbruch versehen ist, der von der mikrostrukturierten Kunststoffschicht vollständig überdeckt wird,
• wobei der mindestens eine Durchbruch vor dem Mikrostrukturieren der Kunststoffschicht oder an einer anderen Stelle des Verfahren in die Trägerplatte eingebracht wird.

11. Verfahren nach den Ansprüchen 1 bis 10, gekennzeichnet durch
• Entfernen der mikrostrukturierten Kunststoffschicht (5) durch
• Herauslösen mittels Lösemitteln wie Ethylacetat, Kalilauge, N-Methylpyrrolidon, Aceton,
• oder durch Zersetzen des Kunststoffs, zum Beispiel Pyrolyse von Polymethylmethacrylat,
• oder durch eine Kombination dieser Verfahren.
